(19) Europäisches Patentamt
European Patent Office
Office européen des brevets

(11) EP 0 794 205 A1

(12) EUROPÄISCHE PATENTANMELDUNG

(43) Veröffentlichungstag:
**10.09.1997 Patentblatt 1997/37**

(51) Int. Cl.$^6$: **C08G 59/30**, C08G 59/14, C08G 59/40

(21) Anmeldenummer: **97103302.2**

(22) Anmeldetag: **28.02.1997**

(84) Benannte Vertragsstaaten:
**AT BE CH DE ES FR GB IT LI NL**

(30) Priorität: **06.03.1996 DE 19608613**

(71) Anmelder: **HOECHST AKTIENGESELLSCHAFT**
**65929 Frankfurt am Main (DE)**

(72) Erfinder:
- **Kleiner, Hans-Jerg, Dr.**
  **61476 Kronberg (DE)**
- **Hörold, Sebastian, Dr.**
  **50374 Erftstadt (DE)**
- **Scholz, Guido, Dr.**
  **84508 Burgkirchen (DE)**

Bemerkungen:
Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 3.).

# (54) Lagerstabile, phosphormodifizierte Epoxidharze

(57) Die vorliegende Erfindung betrifft ein lagerstabiles, phosphormodifiziertes Epoxidharz mit einem Epoxidwert von 0,05 bis 0,6 Mol/100 g enthaltend 5 bis 25 Gew.-% eines aus einem Phosphonsäurediester, Phosphinsäureester oder Gemisch dieser Ester und Phosphorpentoxid gebildeten Ester-Anhydrids sowie ein Verfahren zu seiner Herstellung durch Umsetzung von 95 bis 75 Gew.- Teilen eines Epoxidharzes (A) mit einem Epoxidwert von 0,1 bis 0,8 Mol/100 g und 5 bis 25 Gew.-Teilen des Ester-Anhydrids in Anwesenheit oder Abwesenheit eines Lösungsmittels bei -20 bis 150°C.

EP 0 794 205 A1

## Beschreibung

Die vorliegende Erfindung betrifft neue phosphormodifizierte Epoxidharze mit guter Lagerstabilität und ein Verfahren zu ihrer Herstellung. Die neuen phosphormodifizierten Epoxidharze zeichnen sich durch flammhemmende Eigenschaften aus und sind als flammhemmende Komponenten bei der Herstellung von Kunststoffharzen mit flammwidrigen Eigenschaften von besonderem Interesse.

Phosphormodifizierte Epoxidharze auf Basis von Umsetzungsprodukten von Polyepoxidverbindungen mit Anhydriden von Phosphon- und Phosphinsäuren sind bereits beschrieben (PCT/EP 94/00748 und PCT/EP 95/02965). Sie besitzen besonders gute flammwidrige Eigenschaften und lassen sich als reaktive Epoxidharze bei der Herstellung von Formkörpern, Prepregs, Überzügen und Laminaten (Verbundwerkstoffen), insbesondere für Isolierzwecke in der Elektrotechnik verwenden. Nachteilig ist, daß die Anhydride der Phosphon- und Phosphinsäuren einen relativ großen Aufwand bei der Herstellung erfordern.

Technisch leichter zugänglich als die Anhydride von Phosphon- und Phosphinsäuren sind die Ester der Phosphon- und Phosphinsäuren, die in Kombination mit bestimmten Zinksalzen als Härtungsmittel für Epoxidharze empfohlen werden (US 33 64 159).

Das europäische Patent 0 409 308 betrifft eine härtungsfähige Epoxidharz-Zusammensetzung, die ein härtungsfähiges Epoxidharz und einen für die Härtung wirksamen Anteil eines Härtungsmittels enthalt, wobei als Härtungsmittel ein Polyphosphorsäure-/Polyphosphonsäureester-Anhydrid dient, das durch Umsetzung von Phosphorpentoxid mit einem Phosphonsäureester (Phosphonat) oder Phosphorsäureester (Phosphat) erhältlich ist. Die Polyphosphorsäure-/Polyphosphonsäureester-Anhydride stellen bekanntermaßen für die Härtung von Epoxidverbindungen geeignete Härtungsmittel dar, die nicht nur als reiner Katalysator für die Härtung wirken, sondern auch mit dem Epoxid reagieren. Als Endprodukt entsteht ein ausgehärtetes, festes Harz mit flammwidrigen Eigenschaften. Von Nachteil ist, daß man von vornherein auf das als Endprodukt anfallende ausgehärtete Harz festgelegt ist, dessen Eigenschaften nicht mehr, beispielsweise durch Umsetzung mit anderen Komponenten, modifiziert werden können.

Im Hinblick auf die Bedeutung von Epoxidharzen besteht generell ein Bedarf an Epoxidharzen mit flammhemmenden Eigenschaften, die zum einen leicht zugänglich sind und zum anderen sich problemlos weiterverarbeiten lassen.

Gelöst wird diese Aufgabe durch ein Epoxidharz mit einem Epoxidwert von 0,05 bis 0,6 Mol/100 g enthaltend 5 bis 25 Gew.-% eines aus einem Phosphonsäurediester, Phosphinsäureester oder Gemisch dieser Ester und Phosphorpentoxid gebildeten Ester-Anhydrids.

Das erfindungsgemäße Epoxidharz zeichnet sich durch eine Reihe vorteilhafter Eigenschaften aus.

Es ist erstens reaktiv, das heißt, es enthält reaktive Gruppen, die ihm die Fähigkeit verleihen, wie ein Reaktivharz eingesetzt zu werden.

Es besitzt zweitens flammhemmende Eigenschaften, die auf den Gehalt der durch Umsetzung von einem Phosphonsäurediester, Phosphinsäureester oder Gemisch dieser Ester mit Phosphorpentoxid gebildeten, in dem Epoxid in chemisch gebundener Form enthaltenen Ester-Anhydride zurückgehen.

Es ist drittens leicht zugänglich, da das Ester-Anhydrid auf Phosphorverbindungen basiert, die in technischen Mengen verfügbar sind und auch in ökonomischer Hinsicht aufgrund eines günstigen Preises interessant sind.

Das erfindungsgemäße Epoxidharz ist viertens lagerstabil. Unter dem Begriff lagerstabil wird verstanden, daß das Epoxidharz seine Eigenschaften, insbesondere seine Reaktivität, auch bei längerer Lagerungszeit beibehält und nicht von selbst aushärtet.

Dies ist als überraschend anzusehen, da das Epoxidharz durch Umsetzung eines als Ausgangsmaterial verwendeten Epoxidharzes (nachfolgend Epoxidharz (A) bezeichnet) mit einem als Härter wirkendem Ester-Anhydrid, das durch Umsetzung aus einem Phosphonsäurediester, Phosphinsäureester oder Gemisch dieser Ester und Phosphorpentoxid gebildet wird, erhältlich ist und trotz dieser Umsetzung mit dem als Härter wirkendem Ester-Anhydrid für nachfolgende Umsetzungen eine ausreichende Reaktivität aufweist. Als Maß für die Lagerstabilität kann der Epoxidwert, der selbst bei mehrwöchiger Lagerung nur in geringen Maß abnimmt, herangezogen werden. Je geringer die Abnahme des Epoxidwertes ist, desto höher ist die Lagerstabilität des betreffenden phosphormodifizierten Epoxides.

Die Reaktivität drückt sich durch den Epoxidwert aus. Sie hängt unter anderem auch von der Reaktivität des als Ausgangsmaterial eingesetzten Epoxidharzes (A) ab. Je höher der Epoxidwert des als Ausgangsmaterial eingesetzten Epoxidharzes (A) ist, desto höher ist auch der Epoxidwert des erfindungsgemäßen phosphormodifizierten Epoxidharzes.

Der Epoxidwert des erfindungsgemäßen phosphormodifizierten Epoxidharzes liegt stets unter dem Epoxidwert des Epoxidharzes (A). Dies ist zum einen durch Gewichtsanteil des Ester-Anhydrids und zum anderen durch die Umsetzung des Epoxidharzes (A) mit dem Ester-Anhydrid bedingt. Er liegt unmittelbar nach Herstellung üblicherweise mindestens 10 bis mindestens 30 % unter dem Epoxidwert des als Ausgangsmaterial eingesetzten Epoxidharzes (A), wobei diese Werte als ein Anhaltspunkt zu betrachten sind und als Orientierungshilfe dienen sollen.

Fünftens: Aufgrund seiner Reaktivität läßt sich das flammwidrige, phosphormodifizierte Epoxidharz ähnlich wie ein übliches nicht phosphormodifiziertes Epoxidharz weiterverarbeiten und mit anderen Komponenten, beispielsweise bestimmten Aminen oder Alkoholen umsetzen. Auf diese Weise lassen sich in vorteilhafter Weise die flammhemmenden Eigenschaften des Epoxidharzes in eine Vielzahl von Harzen oder Laminaten einfügen.

Die Verwendung der erfindungsgemäßen phosphormodifizierten Epoxidharze als Bestandteil eines Intumeszenzbeschichtungsmittels ist Gegenstand einer am gleichen Tag wie die vorliegende Anmeldung eingereichten deutschen Patentanmeldung (Aktenzeichen 196 08612.4). Der im Epoxidharz vorhandene Epoxidgehalt wird als Epoxidwert in Mol Epoxid bezogen auf 100 g Epoxidharz ausgewiesen. Der Epoxidwert wird durch Umsetzung des Epoxidharzes mit einem Tetrabutylammoniumhalogenid, beispielsweise Tetrabutylammoniumbromid, in Eisessig und nachfolgende Titration des infolge der Ringöffnung des Epoxids gebildeten Tetrabutylammoniumhydroxids mit $HClO_4$, in Anlehnung an die Bestimmungsmethode gemäß DIN 53 188, ermittelt.

Der Epoxidwert des Epoxidharzes beträgt, wie zuvor bereits erwähnt, 0,05 bis 0,6, insbesondere 0,1 bis 0,4, bevorzugt 0,2 bis 0,35 Mol/100 g.

Das erfindungsgemäße phosphormodifizierte Epoxidharz zeichnet sich, wie bereits zuvor erwähnt, insbesondere durch eine gute Lagerstabilität aus.

Die Lagerstabilität, ausgedrückt durch die Veränderung des Epoxidwertes nach 96 Stunden bei Raumtemperatur und einer relativen Luftfeuchte von maximal 50 %, unterschreitet in der Regel den Wert von 90 % nicht und bewegt sich vorzugsweise im Bereich von etwa 95 % bis 100 %, bezogen auf den Ausgangswert mit 100 %.

Das Epoxidharz enthält, wie zuvor bereits erwähnt, 5 bis 25, insbesondere 10 bis 20, bevorzugt 12 bis 18 Gew.-% Ester-Anhydrid, das durch Umsetzung eines Phosphonsäurediesters, Phosphinsäureesters oder Gemisches dieser Ester mit Phosphorpentoxid entsteht. Gemische dieser Ester können den Phosphonsäurediester und Phosphinsäureester in beliebigen Verhältnissen enthalten. Üblicherweise verwendet man Phosphonsäurediester:Phosphinsäureester im Verhältnis 1:20 bis 20:1, insbesondere 1:10 bis 10:1, bevorzugt 1:5 bis 5:1. Es lassen sich jedoch auch Mischungen mit höherem oder niedrigerem Verhältnis von Phosphonsäurediester:Phosphinsäureester einsetzen.

Das Ester-Anhydrid wird üblicherweise aus 1 bis 3, insbesondere 1,1 bis 2 Mol Phosphonsäurediester, Phosphinsäureester oder Gemischen dieser Ester und 1 Mol Phosphorpentoxid gebildet. Es lassen sich jedoch auch Ester-Anhydride mit höherem Ester-Anteil oder niedrigerem Ester-Anteil, bezogen jeweils auf Phosphorpentoxid, verwenden.

Von besonderem Interesse ist ein Ester-Anhydrid, das aus einem Phosphonsäuredieester oder Phosphinsäureester und Phosphorpentoxid gebildet wird.

Unter Phosphonsäurediester werden Verbindungen der allgemeinen Formel (I)

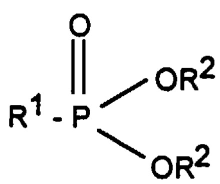

(I)

verstanden, worin $R^1$ für einen Alkylrest mit 1 bis 8 Kohlenstoffatomen, einen substituierten oder unsubstituierten Phenylrest oder einen substituierten oder unsubstituierten Benzylrest, insbesondere einen Alkylrest mit 1 bis 3 Kohlenstoffatomen, einen unsubstituierten Phenyl- oder Benzylrest, und $R^2$ für einen Alkylrest mit 1 bis 4, insbesondere 1 bis 2 Kohlenstoffatomen steht.

Unter Phosphinsäureester werden Verbindungen der allgemeinen Formel (II)

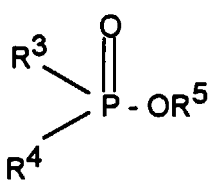

(II)

verstanden, worin $R^3$ und $R^4$ gleich oder verschieden sind und für einen Alkylrest mit 1 bis 8 Kohlenstoffatomen, einen substituierten oder unsubstituierten Phenylrest oder einen substituierten oder unsubstituierten Benzylrest, insbesondere für einen Alkylrest mit 1 bis 3 Kohlenstoffatomen, einen unsubstituierten Phenyl- oder Benzylrest und $R^5$ für einen Alkylrest mit 1 bis 6, insbesondere 1 bis 4 Kohlenstoffatomen steht.

Das erfindungsgemäße phosphormodifizierte Epoxidharz weist im allgemeinen einen Phosphorgehalt von 0,5 bis 8,5, insbesondere 1 bis 5, bevorzugt 2 bis 4 Gew.-%, bezogen auf Epoxidharz, auf. Der Phosphorgehalt hängt jedoch nicht nur von der Menge des Ester-Anhydrids, das im Epoxidharz enthalten ist, ab, sondern auch von der Zusammensetzung des Ester-Anhydrids, das heißt von dem Verhältnis (Phosphonsäuredieester, Phosphinsäureester oder Gemisch dieser Ester) : Phosphorpentoxid. Daneben spielt auch die Art des als Ausgangsmaterial verwendeten Epoxidharzes (nachfolgend Epoxidharz (A) bezeichnet) und dessen Reaktivität eine Rolle.

Das erfindungsgemäße phosphormodifizierte Epoxidharz ist, wie der Epoxidwert ausweist, reaktiv und enthält im Mittel wenigstens 1, insbesondere 1 bis 3 Epoxidgruppen pro Molekül, die mittlere Funktionalität beträgt dementsprechend (im Mittel) wenigstens 1, insbesondere 1 bis 3. In diesem Zusammenhang sei darauf hingewiesen, daß der in Mol Epoxid/100 g Epoxidharz angegebene Epoxidwert ebenfalls ein Mittelwert ist, der, bezogen auf das einzelne Molekül, nach oben und nach unten abweichende Werte annehmen kann.

Die erfindungsgemäßen phosphormodifizierten Epoxidharze besitzen im allgemeinen ein mittleres Molekulargewicht $\overline{M}_n$ (Zahlenmittel, bestimmt durch Gelchromatographie, Polystyrolstandard) bis 10 000, insbesondere 200 bis 5000, bevorzugt 400 bis 2000.

Bevor auf das Verfahren zur Herstellung des erfindungsgemäßen phosphormodifizierten Epoxidharzes näher eingegangen wird, sei darauf hingewiesen, daß das erfindungsgemäße phosphormodifizierte Epoxidharz mit einem Epoxidwert von 0,05 bis 0,6 Mol/100 g durch Umsetzung von 95 bis 75 Gew.-Teilen eines Epoxidharzes (A) mit einem Epoxidwert von 0,1 bis 0,8 Mol/100 g und 5 bis 25 Gew.-Teilen eines durch Umsetzung eines Phosphonsäurediesters, Phosphinsäureesters oder Gemisches dieser Ester mit Phosphorpentoxid gebildeten Ester-Anhydrids in Anwesenheit oder Abwesenheit eines Lösungsmittels bei 20 bis 150°C erhältlich ist.

Das erfindungsgemäße phosphormodifizierte Epoxidharz ist insbesondere durch Umsetzung von 95 bis 75 Gew.-Teilen eines Polyglycidylethers auf Basis von Bisphenol A oder eines Novolakes als Epoxidharz (A) und 5 bis 25 Gew.-Teilen des Ester-Anhydrids erhältlich.

Die vorliegende Erfindung betrifft - wie zuvor bereits angedeutet - auch ein Verfahren zur Herstellung des erfindungsgemäßen Epoxidharzes. Das Verfahren ist dadurch gekennzeichnet, daß man 95 bis 75 Gew.-Teile eines Epoxidharzes (A) mit einem Epoxidwert von 0,1 bis 0,8 Mol/100 g und 5 bis 25 Gew.-Teile Ester-Anhydrid in Anwesenheit oder Abwesenheit eines Lösungsmittels bei -20 bis 150°C umsetzt.

In einer Reihe von Fällen kann man mit gutem Erfolg 90 bis 80 Gew.-Teile Epoxidharz (A) und 10 bis 20 Gew.-Teile Ester-Anhydrid umsetzen.

Unter Ester-Anhydrid wird, wie zuvor bereits erläutert, das durch Umsetzung eines Phosphonsäurediesters, Phosphinsäureesters oder Gemisches dieser Ester mit Phosphorpentoxid gebildete Produkt verstanden.

Das mittlere Molekulargewicht $\overline{M}_n$ (Zahlenmittel; gleichfalls bestimmt mittels Gelchromatographie; Polystyrolstandard) des für die Herstellung des erfindungsgemäßen phosphormodifizierten Epoxidharzes als Ausgangsmaterial verwendeten Epoxidharzes (A) beträgt im allgemeinen bis zu 9000 und liegt üblicherweise zwischen 150 und 9000, vorzugsweise zwischen 150 und 4000, insbesondere zwischen 300 und 1800. Es leitet sich vorzugsweise von Polyepoxidverbindungen mit im Mittel 2 bis 6 Epoxidgruppen pro Molekül (einer Funktionalität von 2 bis 6) ab. Vorzugsweise handelt es sich bei diesen Polyepoxidverbindungen um Polyglycidylether auf Basis von aromatischen Aminen, mehrwertigen Phenolen, Hydrierungsprodukten dieser Phenole und/oder von Novolaken, insbesondere auf Basis von Bisphenol A oder eines Novolakes.

Das erfindungsgemäß als Ausgangsmaterial eingesetzte Epoxidharz (A) (Polyepoxidverbindung), das vorzugsweise nicht halogenmodifiziert ist, kann gesättigt oder ungesättigt sowie aliphatisch, cycloaliphatisch, aromatisch und/oder heterocyclisch sein. Es kann weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen oder ähnliche. Es können auch Gemische verschiedener Polyepoxidverbindungen verwendet werden.

Bevorzugt besitzt das Epoxidharz (A) (Polyepoxidverbindung) die Formel (III)

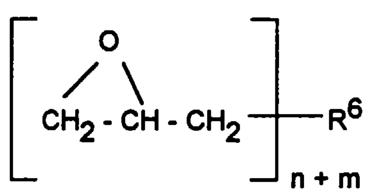

(III)

| | |
|---|---|
| $R^6$ | den um die Glycidylgruppen verminderten Rest einer Polyepoxidverbindung darstellt, |
| n = | eine ganze Zahl von 1 bis 5, vorzugsweise 1 bis 3, |
| m = | eine ganze Zahl von 1 bis 5, vorzugsweise 1 bis 3 ist, wobei die Summe n + m |

eine ganze Zahl von 2 bis 6, vorzugsweise 2 bis 4 sein soll.

Bei dem Rest $R^6$ handelt es sich also um den Rest, der übrigbleibt, wenn man alle vorhandenen Glycidylgruppen aus der Polyepoxidverbindung herausnimmt.

Beispielsweise steht $R^6$ für den um die Glycidylgruppen verminderten (n + m)-wertigen Rest

- eines Polyethers, eines Polyetherpolyols, eines Polyesters oder eines Polyesterpolyols;
- eines Kohlenwasserstoffrestes, der gesättigten oder ungesättigten aliphatischen Charakter und/oder aromatischen Charakter haben und der durch Heteroatome, wie Sauerstoff und Stickstoff, sowie durch Heteroatomgruppen, wie $-NR^7CO-$ (die Bedeutung von $R^7$ wird nachfolgend angegeben) unterbrochen sein und/oder diese enthalten kann, wobei dieser Kohlenwasserstoffrest, der in der Regel mindestens 6, vorzugsweise mindestens 12 bis 30 C-Atome enthält, vorzugsweise Arylgruppen, insbesondere Phenylgruppen enthält, die substituiert sein können, aber vorzugsweise unsubstituiert sein;
- eines Umsetzungsproduktes einer Epoxy-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen, Polycarbonsäuren, hydroxy- oder aminofunktionellen Polytetrahydrofuranen.

$R^6$ kann auch für verschiedene dieser Reste stehen.

$R^7$ steht für einen Kohlenwasserstoffrest von 1 bis 20 C-Atomen, vorzugsweise 1 bis 10 C-Atomen, der aliphatischen und/oder aromatischen Charakter haben und durch Heteroatome oder Heteroatomgruppen unterbrochen sein kann, vorzugsweise einen gesättigten oder ungesättigten, geradkettigen oder verzweigten aliphatischen Rest, wie Alkyl, Alkenyl, Cycloalkyl, mit vorzugsweise 1 bis 8 C-Atomen, insbesondere 1 bis 6 C-Atomen, wie Methyl, Ethyl, n- und i-Propyl, n-, i- und tert.-Butyl, die verschiedenen Pentyle und Hexyle, oder einen Aryl- oder einen Aralkylrest, wie unsubstituiertes oder mit vorzugsweise 1 bis 3 Alkylresten mit 1 bis 6 C-Atomen substituiertes Phenyl oder Naphthyl oder wie Phenylalkyl mit 1 bis 6 C-Atomen im Alkylrest, beispielsweise Benzyl.

Bevorzugt bedeutet $R^6$ den entsprechenden Rest eines Bisphenol-A-diglycidylethers, eines Bisphenol-F-diglycidylethers oder von deren Oligomeren, eines Polyglycidylethers von Phenol/Formaldehyd- bzw. Kresol/Formaldehyd-Novolak, eines Diglycidylesters von Tetrahydrophthal-, Phthal-, Isophthal- oder Terephthalsäure sowie Mischungen dieser Reste.

Nachstehend seien einige dieser Reste $R^6$ formelmäßig wiedergegeben:

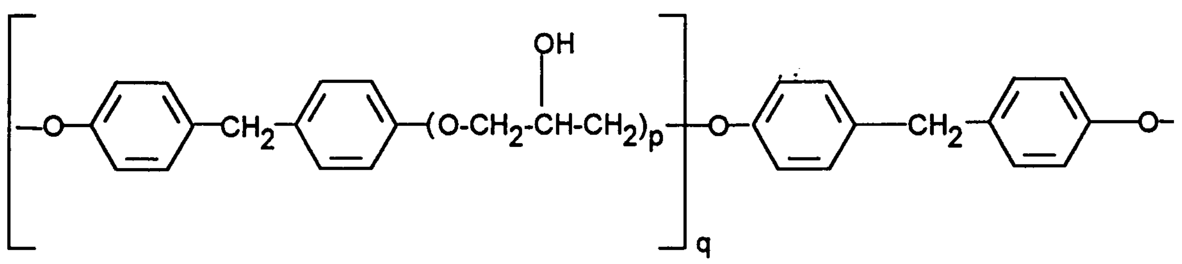

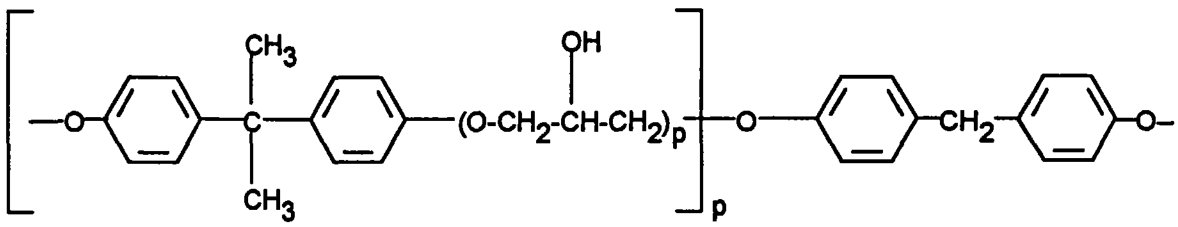

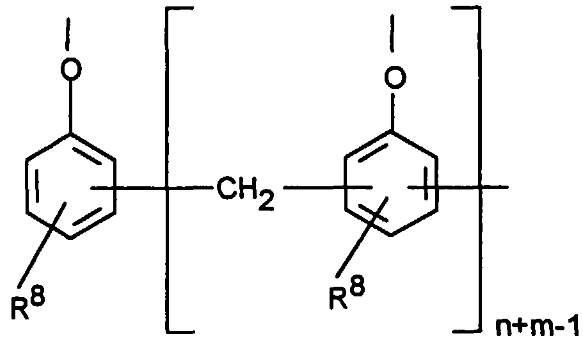

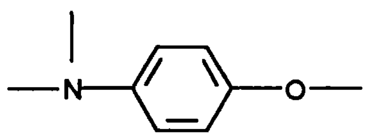

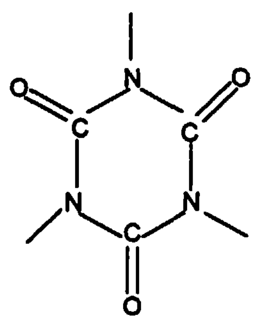

$-CH_2-R^9-CH_2-$ ($R^9$ = $(CH_2)_r$ 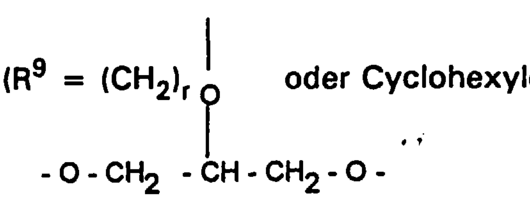 oder Cyclohexylen)

in denen $R^8$ Wasserstoff und/oder der $C_1$-$C_{10}$-Alkyl-Rest ist und die Indices n und m die Bedeutung gemäß der vorstehenden Formel (III) haben, der Index p für 0 oder 1, der Index q für ganze Zahlen von 0 bis 40, vorzugsweise 0 bis 10 und der Index r für ganze Zahlen von 4 bis 8 steht.

Ohne Anspruch auf Vollständigkeit handelt es sich bei den Epoxidharzen (A) (Polyepoxidverbindungen) beispielsweise um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen, wie Phenol und/oder Kresole, mit Aldehyden, insbesondere Formaldehyd in Gegenwart saurer Katalysatoren), die man in bekannter Weise, beispielsweise durch Umsetzung der jeweiligen Polyole mit Epichlorhydrin, erhält.

Als mehrwertige Phenole sind hier beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-ethan, Bis-(4-hydroxyphenyl)-1,1'-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-1,1'-ether, Bisphenol A und Bisphenol F sind hierbei bevorzugt.

Auch die Polyglycidylether von mehrwertigen aliphatischen Alkoholen sind als Epoxidharz (A) (Polyepoxidverbindung) geeignet. Als Beispiele derartiger mehrwertiger Alkohole seien 1,4-Butandiol, 1,6-Hexandiol, Polyalkylenglykole, Glycerin, Trimethylolpropan, Bis-(4-hydroxycyclohexyl)-2,2-propan und Pentaerythrit genannt.

Weiter kommen als Epoxidharze (A) (Polyepoxidverbindungen) auch (Poly)glycidylester in Frage, die man erhält durch Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Phthal-, Isophthal-, Terephthal-, Tetrahydrophthal- oder Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Auch Polyepoxidverbindungen, die die Epoxidgruppen in statistischer Verteilung über die Molekülkette enthalten und die durch Emulsions-Copolymerisation unter Verwendung von olefinisch ungesättigten, diese Epoxidgruppen enthaltenden Verbindungen hergestellt werden können, wie z.B. Glycidylester der Acryl- bzw. Methacrylsäure, können in manchen Fällen vorteilhaft als Epoxidharz (A) eingesetzt werden.

Weitere verwendbare Epoxidharze (A) (Polyepoxidverbindungen) sind beispielsweise solche auf der Basis heterocyclischer Ringsysteme, wie z.B. Hydantoinepoxidharze, Triglycidylisocyanurat und/oder dessen Oligomere, Triglycidyl-p-aminophenol, Triglycidyl-p-aminodiphenylether, Tetraglycidyldiaminodiphenylmethan, Tetraglycidyldiaminodiphenylether, Tetrakis-(4-glycidoxyphenyl)-ethan, Urazolepoxide, Uracilepoxide, oxazolidinonmodifizierte Epoxidharze; weiterhin Polyepoxide auf der Basis von aromatischen Aminen, wie Anilin, beispielsweise N,N-Diglycidylanilin, Diaminodiphenylmethan und N,N'-Dimethylaminodiphenylmethan oder -sulfon. Weitere geeignete Polyepoxidverbindungen sind im "Handbook of Epoxy Resins" von Henry Lee und Kris Neville, McGraw-Hill Book Company, 1967, in der Monographie von Henry Lee "Epoxy Resins", American Chemical Society, 1970, in Wagner/Sarx, "Lackkunstharze", Carl Hanser Verlag (1971), S. 174 ff., in der "Angew. Makromol. Chemie", Bd. 44 (1975), Seiten 151 bis 163, in der DE-Offenlegungsschrift 2 757 733 sowie in der EP-Offenlegungsschrift 0 384 939 beschrieben, auf die hiermit Bezug genommen wird.

Bevorzugt eingesetzte Epoxidharze (A) (Polyepoxidverbindungen ) sind Bisglycidylether auf Basis von Bisphenol A, Bisphenol F und Bisphenol S (Umsetzungsprodukte dieser Bisphenole und Epichlor(halogen)hydrin oder deren Oligomere, Polyglycidylether von Phenol/Formaldehyd- und/oder Kresol/Formaldehyd-Novolake sowie Diglycidylester der Phthal-, Isophthal-, Terephthal-, Tetrahydrophthal- und/oder Hexahydrophthalsäure.

Die verwendeten Epoxidharze (A) (Polyepoxidverbindungen) weisen, wie eingangs bereits erwähnt, üblicherweise einen Epoxidwert von 0,1 bis 0,8 Mol Epoxid/100 g Epoxidharz (A), insbesondere 0,3 bis 0,7, bevorzugt 0,4 bis 0,6 Mol Epoxid/100 g Epoxidharz (A) auf.

Das aus einem Phosphonsäurediester, Phosphinsäureester oder Gemisch dieser Ester und Phosphorpentoxid gebildete Ester-Anhydrid erhält man üblicherweise, indem man 1 bis 3, insbesondere 1,1 bis 2 Mol Phosphonsäurediester der allgemeinen Formel (I)

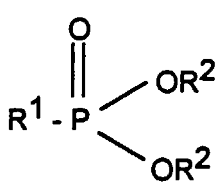

(I)

Phosphinsäureester der allgemeinen Formel (II)

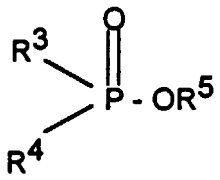

(II)

oder Gemisch dieser Ester mit 1 Mol Phosphorpentoxid umsetzt.

Die Gemische dieser Ester können den Phosphonsäurediester und Phosphinsäureester in beliebigen Verhältnissen enthalten. Üblicherweise verwendet man Phosphonsäurediester:Phosphinsäureester im Verhältnis 1:20 bis 20:1, insbesondere 1:10 bis 10:1, bevorzugt 1:5 bis 5:1. Es lassen sich jedoch auch Mischungen mit höherem oder niedrigerem Verhältnis von Phosphonsäurediester:Phosphinsäureester einsetzen.

Ohne Anspruch auf Vollständigkeit zu erheben, seien als Phosphonsäurediester der Formel (I) Methanphosphonsäuredimethylester, Methanphosphonsäurediethylester, Ethanphosphonsäuredimethylester, Ethanphosphonsäurediethylester, Propanphosphonsäuredimethylester, Propanphosphonsäurediethylester, Benzolphosphonsäuredimethylester, Benzylphosphonsäuredimethylester und als Phosphinsäureester der Formel (II) Dimethylphosphinsäuremethylester, Ethyl-methylphosphinsäuremethylester, Ethyl-methylphosphinsäureethylester. Ethyl-methylphosphinsäureisobutylester, Ethyl-methylphosphinsäureamylester, Methyl-propylphosphinsäuremethylester, Methyl-propylphosphinsäureethylester, Methyl-phenylphosphinsäuremethylester, Methyl-phenylphosphinsäureethylester, Benzyl-methylphosphinsäureisopropylester, Diphenylphosphinsäuremethylester, Diphenylphosphinsäureethylester und Benzyl-phenylphosphinsäure-n-butylester genannt.

Die Umsetzung kann in Anwesenheit oder Abwesenheit eines unter den Reaktionsbedingungen inerten Lösungsmittels erfolgen. In vielen Fällen hat es sich bewährt, ein Lösungsmittel zu verwenden.
Die Herstellung der Ester-Anhydride ist beispielsweise in US 34 54 683 und US 34 54 684 beschrieben.

Im einfachsten Fall wird der Phosphonsäurediester, Phosphinsäureester oder das Gemisch dieser Ester vorgelegt, das Phosphorpentoxid portionsweise zugesetzt und die Mischung beispielsweise auf 100 bis 150°C erhitzt. Man rührt üblicherweise und erhält eine klare Reaktionsmischung. Es lassen sich jedoch auch Ester-Anhydride mit höherem Ester-Anteil oder niedrigerem Esteranteil, jeweils auf Phosphorpentoxid bezogen, herstellen, indem man größere oder kleinere Mengen Phosphonsäurediester, Phosphinsäureester oder Gemische dieser Ester als vorstehend angegeben mit 1 Mol Phosphorpentoxid umsetzt.

Bei der Umsetzung reagiert der Phosphonsäurediester, Phosphinsäureester oder das Gemisch dieser Ester mit dem Phosphorpentoxid und es entsteht das entsprechende Ester-Anhydrid. Üblicherweise verläuft diese Umsetzung vollständig, so daß die Ausgangsstoffe im Ester-Anhydrid nicht oder nur in geringen bis sehr geringen Mengen enthalten sind. Das Ester-Anhydrid besteht somit aus Bausteinen, die auf den Phosphonsäurediester, den Phosphinsäureester oder das Gemisch dieser Ester und auf Phosphorpentoxid zurückgehen, und stellt ein Polyphosphonsäure- und/oder Polyphosphinsäure/Polyphosphorsäure-Ester-Anhydrid dar.

In das Verfahren zur Herstellung des Ester-Anhydrids kann man mit gutem Erfolg einen Phosphonsäurediester der Formel (I)

$$R^1-\overset{\overset{\displaystyle O}{\|}}{P}(OR^2)_2 \qquad (I),$$

worin $R^1$ für einen Alkylrest mit 1 bis 8, insbesondere 1 bis 4, bevorzugt 1 bis 3 Kohlenstoffatomen, Phenyl oder Benzyl und $R^2$ für einen Alkylrest mit 1 bis 4, insbesondere 1 bis 3, bevorzugt 1 bis 2 Kohlenstoffatomen steht, und/oder einen Phosphinsäureester der Formel (II)

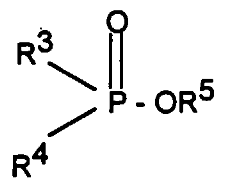

(II),

worin $R^3$ und $R^4$ gleich oder verschieden sind und unabhängig voneinander für einen Alkylrest mit 1 bis 8 Kohlenstoffatomen, Phenyl oder Benzyl, insbesondere für einen Alkylrest mit 1 bis 8, bevorzugt 1 bis 4, besonders bevorzugt 1 bis 3 Kohlenstoffatomen stehen, einsetzen.

Die Herstellung des Ester-Anhydrids kann ohne Zusatz eines Lösungsmittels durchgeführt werden. Es ist jedoch auch möglich, in Anwesenheit eines Lösungsmittels zu arbeiten.

Als Lösungsmittel setzt man bei der Herstellung des Ester-Anhydrids ein polar aprotisches Lösungsmittel, ein aprotisch unpolares Lösungsmittel oder ein Gemisch dieser Lösungsmittel, insbesondere ein polar aprotisches Lösungsmittel oder ein Gemisch dieser Lösungsmittel ein.

Man kann als Lösungsmittel beispielsweise einen aliphatischen oder cycloaliphatischen Ether mit 4 bis 12 Kohlenstoffatomen, einen Alkylenglykol-Monoalkyl- oder -Dialkylether mit 2 bis 20 Kohlenstoffatomen im Alkylenrest und 1 bis 6 Kohlenstoffatomen im Alkylrest, ein aliphatisches oder cycloaliphatisches Keton mit 3 bis 6 Kohlenstoffatomen, einen aliphatischen oder cycloaliphatischen Kohlenwasserstoff mit 6 bis 20 Kohlenstoffatomen, einen aromatischen Kohlenwasserstoff mit 6 bis 20 Kohlenstoffatomen, ein Dialkylamid einer aliphatischen Carbonsäure mit 3 bis 12 Kohlenstoffatomen, N-Methylpyrrolidon oder ein Gemisch dieser Lösungsmittel einsetzen.

Ohne Anspruch auf Vollständigkeit zu erheben, seien als Beispiele für geeignete Lösungsmittel die nachfolgend aufgeführten Solventien genannt:
N-Methylpyrrolidon, Dimethylformamid; Ether, wie Diethylether, Tetrahydrofuran, Dioxan, Ethylenglykol-Mono- bzw. Diether, Propylenglykol-Mono- bzw. Diether, Butylenglykol-Mono- bzw. Diether von Monoalkoholen mit einem gegebenenfalls verzweigten Alkylrest von 1 bis 6 Kohlenstoffatomen; Ketone, wie beispielsweise Aceton, Methylethylketon, Methylisopropylketon, Methylisobutylketon, Cyclohexanon und ähnliche; Ester, wie Ethylacetat, Butylacetat, Ethylglykolacetat, Methoxypropylacetat; halogenierte Kohlenwasserstoffe, (cyclo)aliphatische und/oder aromatische Kohlenwasserstoffe, wie Hexan, Heptan, Cyclohexan, Toluol, die verschiedenen Xylole sowie aromatische Lösemittel im Siedebereich von ca. 150 bis 180°C (höhersiedende Mineralölfraktionen, wie ®Solvesso). Diese Lösungsmittel können einzeln oder im Gemisch eingesetzt werden.

Es hängt vom Einzelfall ab, ob man die Herstellung des erfindungsgemäßen, phosphormodifizierten Epoxidharzes in Anwesenheit oder Abwesenheit eines Lösungsmittels durchführt. Die Anwesenheit eines Lösungsmittels hat den Vorteil, daß das phosphormodifizierte Epoxidharz in Lösung anfällt und diese Lösung sich üblicherweise für eine Weiterbehandlung respektive Weiterverarbeitung gut handhaben läßt. Insbesondere bei phosphormodifizierten Epoxidharzen mit relativ hoher Viskosität erweist sich ein Zusatz eines Lösungsmittels als nützlich.

Die Herstellung des phosphormodifizierten Epoxidharzes erfordert keinen besonderen technischen Aufwand. Man bringt das Epoxidharz (A) (Polyepoxidverbindung), das Ester-Anhydrid und gegebenenfalls das Lösungsmittel in den gewünschten Mengenverhältnissen zusammen, sorgt für eine gute Durchmischung und führt die Umsetzung des Epoxidharzes (A) mit dem Ester-Anhydrid gegebenenfalls unter Erwärmen durch. In einer Reihe von Fällen läuft die Umsetzung von selbst unter gelinder Wärmeentwicklung ab. Es ist jedoch auch möglich, die Umsetzung durch Wärmezufuhr zu begünstigen und zu beschleunigen.

Wie zuvor bereits angegeben, kann man die Umsetzung bei -20 bis 150°C durchführen. In einer Vielzahl von Fällen hat es sich als günstig erwiesen, das Epoxidharz (A) (Polyepoxidverbindung) und das Ester-Anhydrid bei 40 bis 130, insbesondere 60 bis 110°C umzusetzen.

Nach erfolgter Umsetzung läßt man das Reaktionsgemisch abkühlen. Falls gewünscht, kann ein gegebenenfalls vorhandenes Lösungsmittel oder Lösungsmittelgemisch von dem phosphormodifizierten Epoxidharz, beispielsweise durch Destillation, abgetrennt werden.

Es ist allerdings auch möglich, auf eine Abtrennung des Lösungsmittels oder Lösungsmittelgemisches zu verzichten und das phosphormodifizierte Epoxidharz in Form einer Lösung sowohl zu lagern als auch weiterzuverarbeiten.

Die Umsetzung des Epoxidharzes (A) mit dem Ester-Anhydrid führt zur Bildung des erfindungsgemäßen phosphormodifizierten Epoxidharzes, wobei üblicherweise das ursprünglich eingesetzte Ester-Anhydrid vollständig oder nahezu vollständig mit dem Epoxidharz (A) reagiert und im phosphormodifizierten Epoxidharz in chemisch gebundener Form enthalten ist. Freies, nicht umgesetztes Ester-Anhydrid liegt im phosphormodifizierten Epoxidharz nicht oder nur in geringen bis sehr geringen Mengen vor.

Die flammhemmenden Eigenschaften des phosphormodifizierten Epoxidharzes gehen auf den über das Ester-Anhydrid eingebrachten Phosphoranteil zurück.

Das phosphormodifizierte Epoxidharz ist unvernetzt respektive im wesentlichen unvernetzt. Das heißt, sein Gelanteil, der ein Maß für die Vernetzung darstellt, beträgt üblicherweise 0 bis 10, insbesondere 0 bis 5, bevorzugt 0 bis 2, besonders bevorzugt 0 bis 1 Gew.-%. Das phosphormodifizierte Epoxidharz ist daher in organischen Lösungsmitteln löslich und läßt sich beispielsweise in einem Ester oder Keton üblicherweise leicht lösen. Als Beispiele für Ester seien Ester aliphatischer Carbonsäuren mit 1 bis 8 und aliphatischen Alkoholen mit 1 bis 6 Kohlenstoffatomen, wie Methylacetat, Ethylacetat, Propylacetat, Butylacetat, Methyl-, Ethyl-, Propylester der Propionsäure, Buttersäure und Isobuttersäure und als Beispiele für Ketone seien aliphatische Ketone mit insgesamt 3 bis 12 Kohlenstoffatomen, wie Aceton, Methylethylketon, Diethylketon, Methylbutylketon, Methylisobutylketon, Cyclopentanon und Cyclohexanon genannt.

Das phosphormodifizierte Epoxidharz enthält, ausgewiesen durch seinen Epoxidwert, reaktive Gruppen und ist demzufolge ähnlich wie ein übliches nichtphosphormodifiziertes Epoxidharz reaktiv. Es behält selbst bei längerer Lagerung, beispielsweise über mehrere Wochen, seine Reaktivität nahezu unverändert oder allenfalls geringfügig verringert bei. Als Indiz hierfür ist die durch die Lagerung bedingte Abnahme des Epoxidwertes anzusehen, die gering bis sehr gering ausfällt.

Das erfindungsgemäße phosphormodifizierte Epoxidharz besitzt einen geringeren Epoxidwert als das als Ausgangsmaterial eingesetzte Epoxidharz (A). Als Anhaltspunkt hierfür mag ein Epoxidwert von 25 bis 80, insbesondere 35 bis 70, bevorzugt 40 bis 60 % des Epoxidwertes des Epoxidharzes (A) dienen. Es sei aber ausdrücklich daraufhingewiesen, daß dies lediglich ein Richtwert für eine Vielzahl von Fällen ist und ein erfindungsgemäßes Epoxidharz mit einem höheren oder tieferen Epoxidwert nicht ausschließt.

Die nachfolgenden Beispiele beschreiben die Erfindung, ohne sie zu beschränken.

## Experimenteller Teil

### Beispiel 1

#### a) Herstellung des Ester-Anhydrids

76 g (0,5 Mol) Propanphosphonsäuredimethylester werden unter einer Stickstoffatmosphäre portionsweise mit insgesamt 35,5 g (0,25 Mol) Phosphorpentoxid unter Rühren versetzt. Die Temperatur steigt dabei auf 100°C an. Anschließend erhitzt man auf 150°C und erhält das Ester-Anhydrid als klare Reaktionsmischung. Man läßt abkühlen und stellt durch Zugabe von 111,5 g Ethylacetat zu dem abgekühlten Ester-Anhydrid eine 50 gew.-%ige Lösung her.

#### b) Herstellung des phosphormodifizierten Epoxidharzes

Man legt 943,4 g einer Lösung von 754,72 g eines epoxiderten Novolakes mit einem Epoxidwert von 0,7 Mol/100 g und 188,68 g Methylethylketon unter einer Stickstoffatmosphäre (Epoxidwert 0,56 Mol/100 g Lösung) vor und tropft unter Rühren im Verlauf von einer Stunde 211,8 g der gemäß Beispiel 1 a) hergestellten Ester-Anhydrid-Lösung zu. Die Temperatur steigt dabei auf 45°C. Anschließend kocht man das Reaktionsgemisch 11 Stunden unter Rückfluß.

Nach Abkühlen erhält man ein phosphormodifiziertes Epoxidharz mit einem Epoxidwert von 0,27 Mol/100 g Lösung (entsprechend 0,36 Mol/100 g phosphormodifiziertes Epoxidharz lösungsmittelfrei).

Nach vier Wochen Lagerung bei Raumtemperatur beträgt der Epoxidwert unverändert 0,27 Mol/100 g Lösung.

### Beispiel 2

#### a) Herstellung des Ester-Anhydrids

62 g (0,5 Mol) Methanphosphonsäuredimethylester werden unter einer Stickstoffatmosphäre portionsweise binnen kurzer Zeit mit insgesamt 35,5 g (0,25 Mol) Phosphorpentoxid unter Rühren versetzt. Die Temperatur steigt dabei auf 100°C an. Anschließend erhitzt man auf 140°C und erhält das Ester-Anhydrid als klare Reaktionsmischung. Man läßt abkühlen und stellt durch Zugabe von 97,5 g Ethylacetat eine 50 gew.-%ige Lösung her.

#### b) Herstellung des phosphormodifizierten Epoxidharzes

Man legt 943,4 g einer Lösung von 754,72 g eines epoxidierten Novolakes mit einem Epoxidwert von 0,7 Mol/100 g und 188,68 g Methylethylketon (Epoxidwert 0,56 Mol/100 g Lösung) vor und tropft unter Rühren im Verlauf von einer Stunde 180,2 g der gemäß Beispiel 2 a) hergestellten Ester-Anhydrid-Lösung zu. Die Temperatur steigt dabei auf 45°C. Anschließend kocht man das Reaktionsgemisch 11 Stunden unter Rückfluß.

Nach Abkühlen erhält man ein phosphormodifiziertes Epoxidharz mit einem Epoxidwert von 0,27 Mol/100 g Lösung (entsprechend 0,36 Mol/100 g phosphormodifiziertes Epoxidharz lösungsmittelfrei).

Nach vier Wochen Lagerung bei Raumtemperatur beträgt der Epoxidwert 0,26 Mol/100 g Lösung.

Beispiel 3

a) Herstellung des Ester-Anhydrids

60 g (0,333 Mol) Propanphosphonsäurediethylester werden unter einer Stickstoffatmosphäre portionsweise mit insgesamt 24 g (0,169 Mol) Phosphorpentoxid unter Rühren versetzt. Die Temperatur steigt dabei auf 95°C an. Anschließend erhitzt man auf 145°C und erhält das Ester-Anhydrid als klare Reaktionsmischung. Man läßt danach abkühlen. Durch Zusatz von Ethylacetat stellt man eine Lösung mit 53 Gew.-% Ester-Anhydrid her.

b) Herstellung des phosphormodifizierten Epoxidhsrzes

Man legt 400 g einer Lösung von 320 g eines epoxiderten Novolakes mit einem Epoxidwert von 0,7 Mol/100 g und 80 g Methylethylketon (Epoxidwert der resultierenden Lösung: 0,56 Mol/100 g Lösung) vor und tropft unter Rühren im Verlauf von 80 Minuten 98 g der gemäß Beispiel 3 a) hergestellten Lösung des Ester-Anhydrids zu. Die Temperatur steigt dabei auf 43°C. Anschließend kocht man das Reaktionsgemisch 8 Stunden unter Rückfluß.

Nach Abkühlen erhält man ein phosphormodifiziertes Epoxid mit einem Epoxidwert von 0,27 Mol/100 g Lösung (entsprechend 0,361 Mol/100 g phosphormodifiziertes Epoxidharz lösungsmittelfrei).

Nach sechs Monaten Lagerung bei Raumtemperatur beträgt der Epoxidwert 0,26 Mol/100 g Lösung.

Beispiel 4

a) Herstellung des Ester-Anhydrids

99,3 g (0,8 Mol) Methanphosphonsäuredimethylester werden unter einer Stickstoffatmosphäre portionsweise mit insgesamt 82 g (0,58 Mol) Phosphorpentoxid unter Rühren versetzt. Die Temperatur steigt dabei auf 115°C an. Anschließend erhitzt man auf 140°C bis 150°C und erhält das Ester-Anhydrid als klare Reaktionsmischung. Man läßt danach abkühlen.

b) Herstellung des phosphormodifizierten Epoxidharzes

Man legt 224 g eines Epoxidharzes auf Basis von Bisphenol A (Araldit GY 260) mit einem Epoxidwert von 0,51 bis 0,54 Mol/100 g vor und tropft unter Rühren insgesamt 40 g des gemäß Beispiel 4 a) hergestellten Ester-Anhydrids zu. Die Temperatur steigt dabei auf 58°C an und fällt danach ab. Anschließend läßt man das Gemisch über 3,5 Stunden bei 100°C reagieren und erhält nach Abkühlen ein bei Raumtemperatur hochviskoses Öl. Durch Zusatz von Ethylacetat stellt man eine Lösung mit 75 Gew.-% des phosphormodifizierten Epoxidharzes her, deren Epoxidwert 0,21 Mol/100 g Lösung beträgt.

Beispiel 5

a) Herstellung des Ester-Anhydrids

99,3 g (0,8 Mol) Methanphosphonsäuredimethylester werden unter einer Stickstoffatmosphäre portionsweise mit insgesamt 99,4 g (0,7 Mol) Phosphorpentoxid unter Rühren versetzt. Die Temperatur steigt dabei auf 80°C an. Anschließend erhitzt man auf 90°C und erhält das Ester-Anhydrid als klare Reaktionsmischung. Man läßt danach abkühlen.

b) Herstellung des phosphormodifizierten Epoxidharzes

Man löst 100 g eines Bisphenol-A-bisglycidylethers (Beckopox ® EP 140) mit einem Epoxidwert von 0,55 Mol/100 g in 50 ml Dichlormethan. Anschließend löst man 12,5 g des gemäß Beispiel 5 a) hergestellten Ester-Anhydrids in 40 ml Dichlormethan und tropft diese Lösung unter Rühren zu der Lösung des Bisphenol-A-bisglycidylethers innerhalb von 20 Minuten zu. Die Temperatur steigt dabei auf 40°C.

Anschließend erwärmt man, destilliert bei einer Badtemperatur von 65°C das Dichlormethan ab und rührt das Reaktionsgemisch nachfolgend 2 Stunden bei einer Badtemperatur von 100°C.

Man erhält ein klares, farbloses, bei Raumtemperatur festes, phosphormodifiziertes Epoxidharz mit einem Epoxidwert von 0,32 Mol/100 g.

Beispiel 6

a) Herstellung des Ester-Anhydrids

Man löst 14,8 g des gemäß Beispiel 5 a) hergestellten Ester-Anhydrids in 20 ml Dichlormethan.

b) Herstellung des phosphormodifizierten Epoxidharzes

Man löst 115 g eines Bisphenol-A-bisglycidylethers (Beckopox ® EP 140) mit einem Epoxidwert von 0,55 Mol/100 g in 50 ml Methylethylketon und legt diese Lösung unter Erwärmen auf 55°C vor. Anschließend tropft man innerhalb von 20 Minuten unter Rühren die gesamte gemäß Beispiel 6 a) hergestellte Lösung des Ester-Anhydrids zu. Danach erwärmt man, destilliert bei einer Badtemperatur von 80°C Dichlormethan ab und rührt das Reaktionsgemisch nachfolgend 1 Stunde bei einer Badtemperatur von 80°C.

Man erhält eine klare, farblose Lösung des phosphormodifizierten Epoxidharzes mit einem Epoxidwert von 0,22 Mol/100 g Lösung.

Beispiel 7

a) Herstellung des Ester-Anhydrids

Man löst 25 g des gemäß Beispiel 5 a) hergestellten Ester-Anhydrids in 30 ml Dichlormethan.

b) Herstellung des phosphormodifizierten Epoxidharzes

Man löst 100 g eines Bisphenol-A-bisglycidylethers (Beckopox ® EP 140) mit einem Epoxidwert von 0,55 Mol/100 g in 50 ml Methylethylketon und legt diese Lösung unter Erwärmen auf 55°C vor. Anschließend tropft man innerhalb von 20 Minuten unter Rühren die gesamte gemäß Beispiel 7 a) hergestellte Lösung des Ester-Anhydrids zu.
Danach erwärmt man, destilliert bei einer Badtemperatur von 80°C Dichlormethan ab und rührt das Reaktionsgemisch nachfolgend 1 Stunde bei einer Badtemperatur von 80°C. In das anfallende zähflüssige Reaktionsgemisch gibt man noch 50 ml Methylethylketon.

Man erhält 192 g einer klaren farblosen Lösung des phosphormodifizierten Epoxidharzes mit einem Epoxidwert von
0,1 Mol/100 g Lösung.
Nach 12 Tagen Lagerung bei Raumtemperatur beträgt der Epoxidwert der Lösung unverändert 0,1 Mol/100 g Lösung.

Beispiel 8

a) Herstellung des Ester-Anhydrids

132,8 g (0,8 Mol) Ethanphosphonsäurediethylester werden unter einer Stickstoffatmosphäre portionsweise mit insgesamt 99,4 g (0,7 Mol) Phosphorpentoxid unter Rühren versetzt. Die Temperatur steigt dabei auf 80°C an. Anschließend erhitzt man auf 90°C und erhält das Ester-Anhydrid als klare Reaktionsmischung.
Man löst 15,2 g des auf Raumtemperatur abgekühlten Ester-Anhydrids in 40 ml Dichlormethan.

b) Herstellung des phosphormodifizierten Epoxidharzes

Man löst 104 g eines Bisphenol-A-bisglycidylethers (Beckopox ® EP 140) mit einem Epoxidwert von 0,55 Mol/100 g in 50 ml Dichlormethan und legt diese Lösung bei Raumtemperatur vor. Anschließend tropft man innerhalb von 20 Minuten unter Rühren die gesamte gemäß Beispiel 8 a) hergestellte Lösung des Ester-Anhydrids zu. Die Temperatur steigt dabei auf 33°C.
Danach erwärmt man, destilliert bei einer Badtemperatur von 100°C das Lösungsmittel ab und rührt nachfolgend das Reaktionsgemisch noch 2 Stunden bei einer Badtemperatur von 100°C nach.
Man erhält 120 g eines klaren, farblosen, bei Raumtemperatur festen, phosphormodifizierten Epoxidharzes mit einem Epoxidwert von 0,32 Mol/100 g.

Beispiel 9

a) Herstellung des Ester-Anhydrids

48,8 g (0,4 Mol) Ethyl-methylphosphinsäuremethylester werden unter einer Stickstoffatmosphäre portionsweise mit insgesamt 28,4 g (0,2 Mol) Phosphorpentoxid unter Rühren versetzt. Die Temperatur steigt dabei auf 35 bis 40°C. Anschließend erhitzt man auf 135°C, rührt zwei Stunden bei dieser Temperatur nach und erhält das Ester-Anhydrid als klare Reaktionsmischung.
Man läßt abkühlen und stellt durch Zugabe von Ethylacetat eine Lösung mit 50 Gew.-% Ester-Anhydrid her.

b) Herstellung des phosphormodifizierten Epoxidharzes

Man legt 236 g einer Lösung von 188,8 g eines epoxidierten Novolakes mit einem Epoxidwert von 0,7 Mol/100 g und 47,2 g Methylethylketon (Epoxidwert der resultierenden Lösung 0,56 Mol/100 g Lösung) vor und tropft unter Rühren im Verlauf von 35 Minuten 44,6 g der gemäß Beispiel 9 a) hergestellten Lösung des Ester-Anhydrids zu. Die Temperatur steigt dabei auf 35°C an. Anschließend kocht man das Reaktionsgemisch 10 Stunden unter Rückfluß.

Nach Abkühlen erhält man ein phosphormodifiziertes Epoxidharz mit einem Epoxidwert von 0,30 Mol/100 g Lösung (entsprechend 0,39 Mol/100 g phosphormodifiziertes Epoxidharz lösungsmittelfrei).

Vergleichsbeispiel gemäß EP 409 308

a) Herstellung des Ester-Anhydrids

Wie in Beispiel 1 der EP 0 409 308 angegeben werden 99,3 g (0,8 Mol) Methanphosphonsäuredimethylester unter einer Stickstoffatmosphäre portionsweise mit insgesamt 82 g (0,578 Mol) Phosphorpentoxid versetzt.

Man legt 22,4 g eines Epoxidharzes auf Basis von Biphenol A (Araldit GY 260) mit einem Epoxidwert von 0,51 bis 0,54 Mol/100 g vor und tropft unter Rühren insgesamt 20,3 g des gemäß Vergleichsbeispiel a) hergestellten Ester-Anhydrids zu. Die Temperatur steigt dabei bis auf 150°C und fällt nach kurzer Zeit ab. Obwohl man das Reaktionsgemisch nicht nachreagieren läßt, sondern es sofort abkühlen läßt, erhält man nach Abkühlen auf Raumtemperatur ein durchgehärtetes, steinhartes Harz, dessen Epoxidwert lediglich 0,02 Mol/100 g beträgt.

**Patentansprüche**

1. Epoxidharz mit einem Epoxidwert von 0,05 bis 0,6 Mol/100 g enthaltend 5 bis 25 Gew.-% eines aus einem Phosphonsäurediester, Phosphinsäureester oder Gemisch dieser Ester und Phosphorpentoxid gebildeten Ester-Anhydrids.

2. Epoxidharz nach Anspruch 1, dadurch gekennzeichnet, daß der Epoxidwert 0,1 bis 0,4 Mol/100 g beträgt.

3. Epoxidharz nach Anspruch 1 oder 2, dadurch gekennzeichnet, daß das Epoxidharz 10 bis 20 Gew.-% Ester-Anhydrid enthält.

4. Epoxidharz nach einem oder mehreren der Ansprüche 1 bis 3, dadurch gekennzeichnet, daß das Ester-Anhydrid aus 1 bis 3 Mol Phosphonsäurediester, Phosphinsäureester oder Gemisch dieser Ester und 1 Mol Phosphorpentoxid gebildet wird.

5. Epoxidharz nach einem oder mehreren der Ansprüche 1 bis 4, dadurch gekennzeichnet, daß das Ester-Anhydrid aus 1,1 bis 2 Mol Phosphonsäurediester, Phosphinsäureester oder Gemisch dieser Ester und 1 Mol Phosphorpentoxid gebildet wird.

6. Epoxidharz nach einem oder mehreren der Ansprüche 1 bis 5, dadurch gekennzeichnet, daß das Ester-Anhydrid aus einem Phosphonsäurediester oder Phosphinsäureester und Phosphorpentoxid gebildet wird.

7. Verfahren zur Herstellung des Epoxidharzes, dadurch gekennzeichnet, daß man 95 bis 75 Gew.-Teile eines Epoxidharzes (A) mit einem Epoxidwert von 0,1 bis 0,8 Mol/100 g und 5 bis 25 Gew.-Teile Ester-Anhydrid in Anwesenheit oder Abwesenheit eines Lösungsmittels bei -20 bis 150°C umsetzt.

8. Verfahren nach Anspruch 7, dadurch gekennzeichnet, daß man 90 bis 80 Gew.-Teile Epoxidharz (A) und 10 bis 20 Gew.-Teile Ester-Anhydrid umsetzt.

9. Verfahren nach Anspruch 7 oder 8, dadurch gekennzeichnet, daß man ein Epoxidharz (A) mit einem mittleren Molekulargewicht $M_n$ von 150 bis 9000 einsetzt`

10. Verfahren nach einem oder mehreren der Ansprüche 7 bis 9, dadurch gekennzeichnet, daß man ein Epoxidharz (A) mit einem mittleren Molekulargewicht $M_n$ von 150 bis 4000 einsetzt.

11. Verfahren nach einem oder mehreren der Ansprüche 7 bis 10, dadurch gekennzeichnet, daß man ein Epoxidharz (A) mit einem mittleren Molekulargewicht $M_n$ von 300 bis 1800 einsetzt.

12. Verfahren nach einem oder mehreren der Ansprüche 7 bis 11, dadurch gekennzeichnet, daß man als Epoxid (A) einen Polyglycidylether auf Basis von Bisphenol A oder eines Novolakes einsetzt.

13. Verfahren nach einem oder mehreren der Ansprüche 7 bis 12, dadurch gekennzeichnet, daß man 1 bis 3 Mol Phosphonsäurediester, Phosphinsäureester oder Gemisch dieser Ester und 1 Mol Phosphorpentoxid in Anwesenheit eines Lösungsmittels umsetzt und das Ester-Anhydrid in Form dieser Lösung einsetzt.

14. Verfahren nach einem oder mehreren der Ansprüche 7 bis 13, dadurch gekennzeichnet, daß man 1,1 bis 2 Mol Phosphonsäurediester, Phosphinsäureester oder Gemisch dieser Ester und 1 Mol Phosphorpentoxid umsetzt.

15. Verfahren nach einem oder mehreren der Ansprüche 7 bis 14, dadurch gekennzeichnet, daß man als Lösungsmittel ein aprotisch polares Lösungsmittel, ein aprotisch unpolares Lösungsmittel oder ein Gemisch dieser Lösungsmittel einsetzt.

16. Verfahren nach einem oder mehreren der Ansprüche 7 bis 15, dadurch gekennzeichnet, daß man als Lösungsmittel einen aliphatischen oder cycloaliphatischen Ether mit 4 bis 12 Kohlenstoffatomen, einen Alkylenglykol-Monoalkyl- oder -Dialkylether mit 2 bis 20 Kohlenstoffatomen im Alkylenrest und 1 bis 6 Kohlenstoffatomen in Alkylrest, ein aliphatisches oder cycloaliphatisches Keton mit 3 bis 6 Kohlenstoffatomen, einen aliphatischen oder cycloaliphatischen Kohlenwasserstoff mit 6 bis 20 Kohlenstoffatomen, einen aromatischen Kohlenwasserstoff mit 6 bis 20 Kohlenstoffatomen, ein Dialkylamid einer aliphatischen Carbonsäure mit 3 bis 12 Kohlenstoffatomen, N-Methylpyrrolidon oder ein Gemisch dieser Lösungsmittel einsetzt.

17. Verfahren nach einem oder mehreren der Ansprüche 7 bis 16, dadurch gekennzeichnet, daß man einen Phosphinsäurediester der Formel (I)

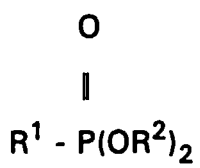 (I),

worin $R^1$ für einen Alkylrest mit 1 bis 8 Kohlenstoffatomen, Phenyl oder Benzyl und $R^2$ für einen Alkylrest mit 1 bis 4 Kohlenstoffatomen steht, einsetzt.

18. Verfahren nach einem oder mehreren der Ansprüche 7 bis 16, dadurch gekennzeichnet, daß man einen Phosphinsäureester der Formel (II)

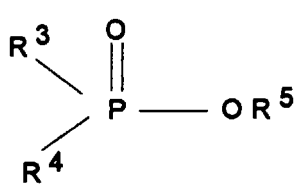 (II)

worin $R^3$ und $R^4$ gleich oder verschieden sind und unabhängig voneinander für einen Alkylrest mit 1 bis 8 Kohlenstoffatomen, Phenyl oder Benzyl stehen und $R^5$ ein Alkyrest mit 1 bis 6 Kohlenstoffatomen ist, einsetzt.

**19.** Verfahren nach einem oder mehreren der Ansprüche 7 bis 18, dadurch gekennzeichnet, daß man das Epoxidharz (A) und das Ester-Anhydrid bei 40 bis 130°C umsetzt.

**20.** Verfahren nach einem oder mehreren der Ansprüche 7 bis 19, dadurch gekennzeichnet, daß man das Epoxidharz (A) und das Ester-Anhydrid bei 60 bis 110°C umsetzt.

Europäisches Patentamt

# EUROPÄISCHER RECHERCHENBERICHT

Nummer der Anmeldung
EP 97 10 3302

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,D | EP 0 409 308 A (AKZO N.V.) 23.Januar 1991<br>* Seite 3, Zeile 36; Ansprüche 1-3; Beispiele 1-5 *<br>--- | 1-17,19, 20 | C08G59/30<br>C08G59/14<br>C08G59/40 |
| X,D | DE 44 27 456 A (SIEMENS AG) 8.Februar 1996<br>* Seite 2, Zeile 40 - Seite 6, Zeile 26; Ansprüche 6,7; Beispiele 1,2 *<br>--- | 1-6 | |
| D,X | DE 43 08 185 A (SIEMENS) 22.September 1994<br>* Ansprüche 9,15; Beispiele 1-3; Tabellen 1-3 *<br>--- | 1-6 | |
| A | US 3 454 683 A (HOECHST) 8.Juli 1969<br>----- | 1-20 | |
| | | | **RECHERCHIERTE SACHGEBIETE (Int.Cl.6)** |
| | | | C08G |

Der vorliegende Recherchenbericht wurde für alle Patentansprüche erstellt

| Recherchenort | Abschlußdatum der Recherche | Prüfer |
|---|---|---|
| MÜNCHEN | 23.Mai 1997 | Devriese, K |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)